Europäisches Patentamt

European Patent Office

Office européen des brevets

(11) Veröffentlichungsnummer: **0 247 452**
**A1**

(12) **EUROPÄISCHE PATENTANMELDUNG**

(21) Anmeldenummer: **87107019.9**

(22) Anmeldetag: **14.05.87**

(51) Int. Cl.⁴: **H01S 3/03** , H01S 3/045

(30) Priorität: **22.05.86 DE 3617208**

(43) Veröffentlichungstag der Anmeldung:
**02.12.87 Patentblatt 87/49**

(84) Benannte Vertragsstaaten:
**DE FR GB**

(71) Anmelder: **Siemens Aktiengesellschaft Berlin und München**
**Wittelsbacherplatz 2**
**D-8000 München 2(DE)**

(72) Erfinder: **Lamprecht, Herbert, Dr. Dipl.-Phys.**
**Am Harras 12**
**D-8000 München 70(DE)**
Erfinder: **Funk, Günter**
**Hohenwaldeckstrasse 14**
**D-8000 München 90(DE)**
Erfinder: **Krüger, Hans, Dipl.-Phys.**
**Peralohstrasse 13**
**D-8000 München 83(DE)**

(54) **Ionenlaser.**

(57) In einem Ionenlaser mit einer Magnetfeldquelle zur Erzeugung eines axialen Magnetfeldes wird eine Leistungssteigerung erreicht, indem die Magnetfeldquelle kürzer gehalten wird als der Entladungskanal (8) und die Feldstärke der Magnetquelle im Entladungskanal (8) den für transversale Magnetfelder bekannten Schwellwert von etwa 700 Gauss überschreitet.

Die Erfindung ist für Argon-Ionenlaser besonders vorteilhaft einsetzbar.

## FIG 3

## Ionenlaser

Die Erfindung betrifft einen Ionenlaser gemäß dem Oberbegriff des Patentanspruchs 1. Ein derartiger Ionenlaser ist aus Applied Physics 4(1974), Seiten 141 bis 145 bekannt. Dort wird durch die Anwendung eines axialen Magnetfeldes im Entladungskanal eine Verbesserung der Laserleistung erzielt.

In Appl.Phys.Lett. 46(10) vom 15.Mai 1985, Seiten 925 bis 927 wird durch Anwendung eines transversalen Magnetfeldes eine Steigerung der Laserleistung um den Faktor 3 erreicht, diese Steigerung wird aber wegen der gleichzeitig erforderlichen Erhöhung der Anregungsspannung durch eine Erhöhung der Eingangsleistung auf zumindest das Doppelte erkauft. Zusätzlich wird die erforderliche Zündspannung durch das axiale Magnetfeld in etwa um den Faktor 3 erhöht. Das bedeutet einen erheblichen zusätzlichen Aufwand für die Ansteuerung des Lasers.

Die Aufgabe, die der vorliegenden Erfindung zugrundeliegt, besteht in einer Steigerung der Laserleistung ohne eine nennenswerte Erhöhung der Anregungsspannung oder der Zündspannung. Insbesondere sollen die bisher verwendeten Ansteuergeräte weiterverwendet werden können.

Diese Aufgabe wird bei einem Ionenlaser gemäß dem Oberbegriff durch die kennzeichnenden Merkmale des Patentanspruchs 1 gelöst. Die beanspruchte Anordnung ruft im Entladungskanal teilweise ein axiales Magnetfeld und teilweise ein Magnetfeld mit einer axialen und einer radialen Komponente hervor. Dadurch ist eine verbesserte Ausbeute an Laserlicht zu erreichen, ohne daß die Spannung am Entladungskanal und damit die Leistungsaufnahme nennenswert erhöht wird. Diese Erkenntnis, die unserer Erfindung zugrundeliegt, ermöglicht auch eine besonders einfache Ausgestaltung der Magnetfeldquelle, da es genügt, Permanentmagnete in der Nähe des Entladungskanals anzuordnen, deren Ausdehnung in axialer Richtung des Entladungsrohres kleiner ist als die Länge des Entladungskanals. Die Form der Permanentmagnete kann weitgehend den konstruktiven Gegebenheiten angepaßt werden. Insbesondere bei luftgekühlten Ionenlasern werden vorteilhaft zwei oder mehr Magnetfeldquellen vorgesehen, wobei diese durch voneinander in axialer Richtung beabstandete Permanentmagnete gebildet sind. Sie können beispielsweise in geeignetem Abstand zwischen je zwei Kühlblechen angeordnet sein. Vorteilhaft werden Magnetringe eingesetzt, die den Entladungskanal umschließen. Sie erzeugen ein stark ausgeprägtes axiales Magnetfeld, der radiale Anteil außerhalb der Ringe kann durch die Dimensionierung der Ringe genau eingestellt werden. Dabei können die Magnetringe aus ringsektorförmigen Magneten zusammengesetzt sein. Dies erleichtert die Montage der Magnetringe und ermöglicht einen nachträglichen Einbau. Die Magnete lassen sich vorteilhaft an den Kühlblechen des Lasers befestigen, insbesondere bei luftgekühlten Ausführungsformen.

Eine besonders starke Erhöhung der Lichtausbeute wird erreicht, wenn die Magnetfeldquelle, vorzugsweise in Form eines Magneten oder Magnetringes an den Kathodenraum angrenzend angeordnet ist. An dieser Stelle ist in der Regel auch relativ viel Platz vorhanden, so daß der Ring so dimensioniert werden kann, daß sein Magnetfeld den gesamten Entladungskanal annähernd mit gleichmäßiger Stärke durchsetzt. Sollen dagegen Magnetringe mit kleinerem Außendurchmesser eingesetzt werden, so ergibt sich eine ebenfalls besonders leicht herstellbare Ausführungsform, indem Magnete oder Magnetringe nur im Bereich der beiden Enden des Entladungskanals angeordnet sind.

Eine größere Zahl von kleinen Magneten empfiehlt sich, wenn der Entladungskanal in einem rechteckförmigen Keramikstab untergebracht ist und die Magnete auf den breiten Begrenzungsflächen des Keramikstabes angeordnet sind. Bei dieser Ausführungsform kann eine genau definierte Magnetfeldführung erreicht werden, ohne daß die Wärmeabfuhr nennenswert beeinträchtigt wird.

Die Erfindung läßt sich bei Argon-Ionenlasern besonders vorteilhaft einsetzen, insbesondere bei Argon-Ionenlasern mit einer Laserleistung im Milliwattbereich.

Die Erfindung wird nun anhand von vier Figuren näher erläutert. Sie ist nicht auf die in den Figuren gezeigten Beispiele beschränkt.

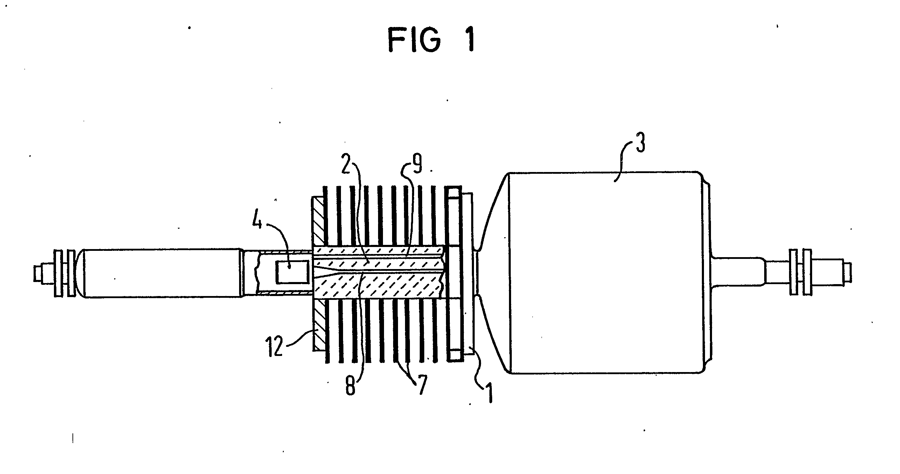

Fig. 1 zeigt einen Argon-Ionenlaser mit erfindungsgemäßen Magnetfeldquellen in teilweise geschnittener Ansicht,

Fig. 2 zeigt einen Ausschnitt aus einem Laserrohr mit erfindungsgemäßen Magnetfeldquellen,

Fig. 3 zeigt ein Ausführungsbeispiel mit einem rechteckförmigen Stab als Laserrohr,

Fig. 4 zeigt einen Ausschnitt aus Fig. 3.

Anschließend an den Kathodenraum 3 eines Ionenlasers ist auf das Laserrohr 2 ein ringförmiger Permanentmagnet 1 aufgesteckt. Der Permanentmagnet 1 ist an der benachbarten Kühlscheibe 7 mechanisch fest gehalten. Am anderen Ende des Laserrohrs 2, auf der Seite der Anode 4, ist ebenfalls ein Magnetring 12 auf das Laserrohr 2 aufgesteckt und durch die benachbarte Kühlscheibe 7 gehalten. In diesem Beispiel entsteht in einem großen Teil des Entladungskanals 8 ein axiales Magnetfeld, die radialen oder transversalen Komponenten sind relativ klein, da das Laserrohr 2 neben dem Entladungskanal 8 auch zumindest einen Rückführungskanal 9 enthält und daher konstruktionsbedingt einen im Vergleich zum Durchmesser des Entladungskanals 8 großen Durchmesser besitzt.

Insbesondere bei Ausführungsformen mit relativ kurzen Laserrohren 2 empfiehlt es sich, den anodenseitigen Magnetring 12 wegzulassen, um den erwünschten Anteil an radialen oder transversalen Feldkomponenten zu erreichen und gleichzeitig Kosten zu sparen.

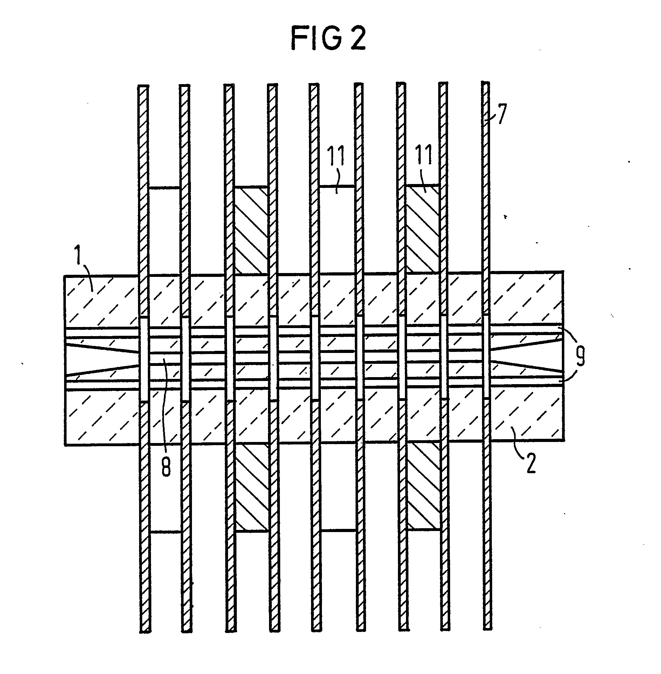

Gemäß Fig. 2 sind Magnetringe 12 zwischen Kühlblechen 7 angeorndnet. Die Magnetringe setzen sich aus jeweils zumindest zwei ringsektorförmigen Permanentmagneten 11 zusammen. Benachbarte Ringsektoren sind gegeneinander in Umfangsrichtung versetzt angeordnet. Bei dieser Ausführungsform läßt sich durch unterschiedliche Feldstärken der verschiedenen Magnete ein gewünschter Verlauf der Feldstärke im Entladungskanal 8 einstellen. Wegen der größeren Zahl der Magnete kann ihr Durchmesser relativ klein gehalten werden. Dadurch liegt der größte Teil der Kühlfläche frei, die Kühlung ist nicht nennenswert beeinträchtigt. Sofern der Fertigungsprozeß es zuläßt, können auch in dieser Ausführungsform einstückige Magnetringe eingesetzt werden.

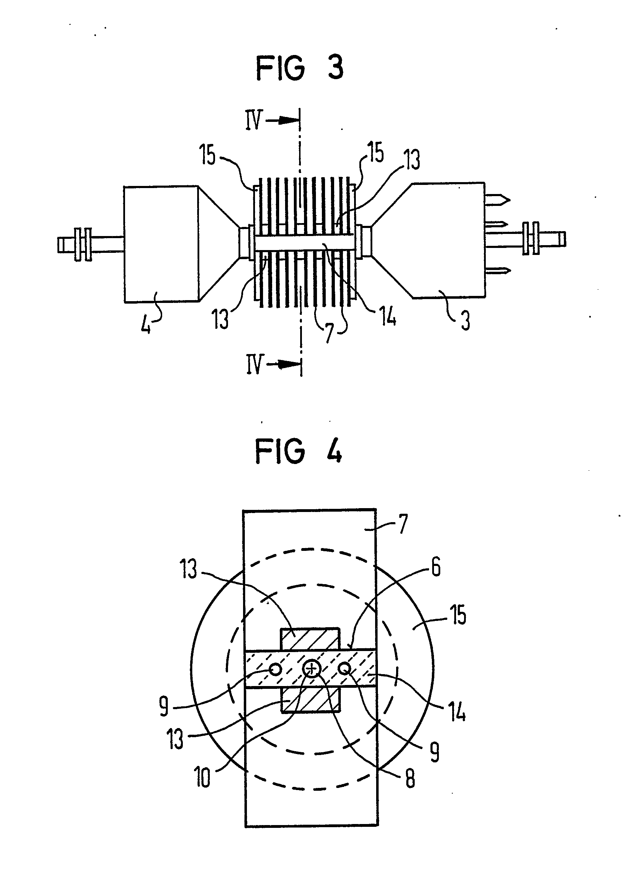

In der Ausführungsform gemäß den Figuren 3 und 4 sind Einzelmagnete 13 auf die größeren Begrenzungsflächen 6 eines rechteckförmigen Keramnikstabes 14 aufgesetzt, wobei der Keramikstab 14 in seiner Symmetrieachse 10 den Entladungskanal 8 und zu diesem achssymmetrisch zwei Gasrückführungskanäle 9 enthält. Die Einzelmagnete 13 können hier als einfache Quadermagnete und besonders klein ausgeführt sein. Sie tragen zur Versteifung des Entladungskanals gegen Biegebeanspruchungen bei, insbesondere da sie den Zwischenraum zwischen zwei Kühlblechen 7 in axialer Richtung vollständig ausfüllen. Zusätzlich sind an den beiden Enden des Entladungskanals Magnetringe 15 angebracht. Diese Ausführungsform ermöglicht eine definierte Feldführung auch mit transversalen Feldkomponenten, indem die Magnetringe 15 ein axiales, die Einzelmagnete 13 zumindest zum Teil ein transversales Magnetfeld erzeugen.

Die beschriebenen Magnetanordnungen sind vorzugsweise so dimensioniert, daß sie im Entladungskanal zumindest an einer Stelle eine Feldstärke von etwa 700Gauss erzeugen.

Bezugzeichenliste

  1 Permanentmagnet
  2 Laserrohr
  3 Kathodenraum
  4 Anode
  5
  6 Begrenzungsfläche
  7 Kühlscheibe
  8 Entladungskanal
  9 Rückführungskanal
 10 Symmetrieachse
 11 Permanentmagnet
 12 Magnetring
 13 Einzelmagnet
 14 Keramikstab
 15 Magnetring

**Ansprüche**

1. Ionenlaser, welcher in einem Laserrohr einen Gasentladungskanal und eine Magnetfeldquelle zur Erzeugung eines axialen Magnetfeldes im Bereich des Entladungskanals enthält, wobei das hierdurch erzeugte Magnetfeld im Entladungskanal den für transversale Magnetfelder bekannten kritischen Schwellwert der Feldstärke überschreitet, **dadurch gekennzeichnet,** daß sich die Magnetfeldquelle entlang einer Teilstrecke, nicht aber über die gesamte Länge des Entladungskanals erstreckt und daß sie außerhalb dieser Teilstrecke im Entladungskanal radiale oder transversale Feldkomponenten erzeugt.

2. Ionenlaser nach Anspruch 1, **dadurch gekennzeichnet,** daß die Magnetfeldquelle durch einen Permanentmagneten gebildet ist, dessen Ausdehnung in axialer Richtung des Entladungsrohres kleiner ist als die Länge des Entladungsrohres.

3. Ionenlaser nach Anspruch 1, **dadurch gekennzeichnet ,** daß zwei oder mehr Magnetfeldquellen vorgesehen sind und daß diese durch voneinander in Achsrichtung des Entladungskanals beabstandete Permanentmagnete gebildet sind.

4. Ionenlaser nach Anspruch 1, **dadurch gekennzeichnet,** daß als Magnetfeldquelle Magnetringe dienen, welche den Entladungskanal umschließen.

5. Ionenlaser nach Anspruch 4, **dadurch gekennzeichnet,** daß die Magnetringe aus ringsektorförmigen Permanentmagneten zusammengesetzt sind.

6. Ionenlaser nach einem der Ansprüche 1 bis 5, dadurch **gekennzeichnet ,** daß mit dem Laserrohr Kühl bleche und mit diesen die Magnete mechanisch fest verbunden sind.

7. Ionenlaser nach Anspruch 1, **dadurch gekennzeichnet**, daß die Magnetfeldquelle am Kathodenraum angrenzend angeordnet ist.

8. Ionenlaser nach Anspruch 7, **dadurch gekennzeichnet**, daß eine weitere Magnetfeldquelle am anderen Ende des Entladungskanals, auf der Anoden-Seite, angeordnet ist.

9. Ionenlaser nach Anspruch 1, **dadurch gekennzeichnet**, daß der Entladungskanal in einem rechteckförmigen Keramikstab untergebracht ist und in dessen Symmetrieachse verläuft und daß mehrere relativ kleine Einzelmagnete an den breiteren Begrenzungsflächen des Keramikstabes entlang dem Entladungskanal angeordnet sind.

10. Ionenlaser nach einem der Ansprüche 1 bis 9, **dadurch gekennzeichnet** , daß er als Argon-Ionenlaser ausgebildet ist.

11. Ionenlaser nach Anspruch 9, **dadurch gekennzeichnet**, daß an den beiden Enden des Entladungskanals Ringmagnete angebracht sind und daß die Einzelmagnete zumindest zum Teil so magnetisiert sind, daß sie ein transversales, senkrecht zum Entladungskanal verlaufendes Magnetfeld erzeugen.

# FIG 1

0 247 452

# FIG 2

# FIG 3

# FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,A | US-A-3 522 551 (J.R. FENDLEY) <br><br> * Spalte 1, Zeilen 27-47; Spalte 2, Zeilen 8-23; Spalte 2, Zeile 63 - Spalte 3, Zeile 8; Spalte 3, Zeilen 43-56; Abbildung 1 * | 1,3-5, 6-8,10 | H 01 S 3/03 <br> H 01 S 3/045 |
| X,A | DE-A-2 026 109 (RCA CORP.) <br><br> * Seite 3, Zeilen 11-33; Seite 5, Zeilen 14-24; Abbildungen 1,3 * | 1-3,7, 8 | |
| X | IBM TECHNICAL DISCLOSURE BULLETIN, Band 22, Nr. 8A, Januar 1980, Seiten 3239-3240, New York, US; J.H. KELLER: "Multipole containment of laser plasma" <br> * Insgesamt * | 1,3 | |
| A | US-A-4 035 741 (M.D. CRISP et al.) <br> * Spalte 4, Zeilen 22-68; Abbildung 5 * | 1-3 | RECHERCHIERTE SACHGEBIETE (Int. Cl.4) <br><br> H 01 S |
| A | US-A-3 413 568 (E.I. GORDON et al.) <br> * Spalte 1, Zeile 66 - Spalte 2, Zeile 43; Spalte 6, Zeilen 55-59 * | 1,3,7, 8 | |

-/-

Der vorliegende Recherchenbericht wurde für alle Patentansprüche erstellt.

| Recherchenort | Abschlußdatum der Recherche | Prüfer |
|---|---|---|
| DEN HAAG | 27-08-1987 | HORAK G.I. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 052 714 (ELTRO GmbH GESELLSCHAFT FÜR STRAHLUNGSTECHNIK) * Seite 6, Zeile 32 - Seite 7, Zeile 37; Abbildung 9 * | 1,3 | |
| | --- | | |
| A | PATENT ABSTRACTS OF JAPAN, Band 9, Nr. 302 (E-362)[2025], 29. November 1985; & JP-A-60 138 983 (TOSHIBA K.K.) 23-07-1985 * Insgesamt * | 1,6 | |
| | --- | | |
| A,D | APPLIED PHYSICS LETTERS, Band 46, Nr. 10, 15. Mai 1985, Seiten 925-927, American Institute of Physics, New York, US; S. KOBAYASHI et al.: "Power enhancement for argon II narrow tube lasers by a transverse magnetic field" * Insgesamt * | 1,10 | |
| | | | RECHERCHIERTE SACHGEBIETE (Int. Cl.4) |
| | --- | | |
| A,D | APPLIED PHYSICS, Band 4, 1974, Seiten 141-145, Springer Verlag, Heidelberg, DE; K. BANSE et al.: "Der Einfluss axialer Magnetfelder auf den ArII-Hochleistungslaser" | 1,10 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 27-08-1987 | HORAK G.I. |